Europäisches Patentamt

European Patent Office

Office européen des brevets

(19)

(11) Veröffentlichungsnummer : **0 067 900**
**B1**

(12) **EUROPÄISCHE PATENTSCHRIFT**

(45) Veröffentlichungstag der Patentschrift :
05.06.85

(21) Anmeldenummer : 81104879.2

(22) Anmeldetag : 24.06.81

(51) Int. Cl.⁴ : **B 01 F 3/04**, **A 01 K 63/04**,
**A 01 K 63/00**, **C 02 F 3/20**

(54) **Vorrichtung zur dosierten Diffusion von Gasen in Flüssigkeiten.**

(43) Veröffentlichungstag der Anmeldung :
29.12.82 Patentblatt 82/52

(45) Bekanntmachung des Hinweises auf die Patenterteilung : 05.06.85 Patentblatt 85/23

(84) Benannte Vertragsstaaten :
AT BE CH FR GB IT LI LU NL SE

(56) Entgegenhaltungen :
FR-A- 2 398 024
GB-A- 1 089 228
US-A- 2 359 025
US-A- 2 738 613
US-A- 2 998 222
US-A- 3 608 834
US-A- 4 129 095

(73) Patentinhaber : **Grittmann, Günter**
**Ringstrasse 6**
**D-7519 Eppingen-Mühlbach (DE)**

(72) Erfinder : **Dorsch, Dieter**
**Tscherningstrasse 22**
**D-7100 Heilbronn (DE)**

(74) Vertreter : **Schulze, Ilse, Dipl.-Chem. et al**
**Patenanwälte Dipl.-Chem. I. Schulze Dipl.-Ing. E. Gutscher Gaisbergstrasse 3**
**D-6900 Heidelberg (DE)**

**Beschreibung**

Die Erfindung bezieht sich auf eine Vorrichtung zur dosierten Diffusion von Gasen in Flüssigkeiten, bestehend aus einem über eine Einlassvorrichtung mit Gas befüllbaren, flüssigkeitsumspülten Diffusor, der über ein selbsttätig regelndes Druckregelventil mit Gas befüllbar ist, das über einen Schlauch mit einem an dem dem offenen Bereich gegenüberliegenden Bereich des Diffusors vorgesehenen Ansatzstutzen verbunden ist.

Aus der US-A-2 738 613 und der US-A-4 129 095 sind Vorrichtungen zum Belüften von Wasser in Behältern bekannt, in dem Lebewesen, wie Fischköder oder Fische, gehalten werden. Es wird hier vorgeschlagen, über eine Einlassvorrichtung Luft in einen flüssigkeitsumspülten Diffusor zu leiten, bzw. einen Flüssigkeitsbehälter über einen selbsttätig regelnden Druckregler mit Luft zu befüllen.

In der Aquaristik stellt sich vor allem das Problem einer dosierten Anreicherung des Aquariumwassers mit Kohlendioxid ($CO_2$). Neben einer Funktion als Pflanzennährstoff wirkt Kohlendioxid im Aquariumwasser als chemische Gleichgewichtskomponente im Bikarbonat-Kohlensäuresystem, dessen optimale Einstellung für den Biotop des Aquariums von grosser Bedeutung ist. Der Bedarf an freiem Kohlendioxid richtet sich nach dem Wasservolumen des Aquariums und dem Besatz mit Pflanzenmasse, Art und Stärke der den Assimilationsvorgang beeinflussenden Beleuchtung sowie dem natürlichen Anteil an chemischer Gleichgewichtskohlensäure (Karbonathärte). Die Einstellung der $CO_2$-Zufuhr kann durch Messen des Wasser-pH-Wertes kontrolliert werden.

Eine bekannte Vorrichtung zur Diffusion von $CO_2$ in Aquarien besteht aus einem Diffusionszylinder, der vermittels eines Saugnapfsystems, beispielsweise zwei seitlich angesetzte Saugnäpfe in vertikaler Stellung, an die Innenwand des Aquariums montiert wird. Die obere Stirnfläche des Diffusionszylinders ist als Diffusionsmembran ausgelegt, über die sich das Gas direkt in das Wasser löst. Die Membran muss dazu vollständig mit Wasser bedeckt sein und vorzugsweise in einer Höhe von etwa 4 cm unterhalb des Wasserspiegels liegen. Der Diffusionszylinder wird über einen nahe der Membran am Zylindermantel angeformten Schlauchstutzen befüllt. Während des Füllvorgangs wird in dem Diffusionszylinder stehendes Wasser durch $CO_2$-Überdruck verdrängt. Dazu ist in der der Membran gegenüberliegenden Stirnfläche eine Bodenöffnung vorgesehen, durch die auch während des allmählichen Diffusionsverlustes an $CO_2$ im Druckgleichgewicht Wasser nachströmt. Zur Kontrolle des Füllstands ist der Diffusionszylinder aus Glas oder einem durchsichtigen Kunststoff ausgelegt. Die Befüllung erfolgt durch ein Regelventil, in dem eine $CO_2$-Patrone untergebracht ist, portionsweise von Hand. Ein solcher Diffusionszylinder muss wenigstens einmal täglich manuell mit $CO_2$ aufgefüllt werden.

Eine derartige Diffusionseinrichtung weist eine Reihe von Nachteilen auf. Einmal ist die Grösse der Diffusionsmembran konstruktionsbedingt vorgegeben, so dass sich die Diffusionsrate nur durch eine umständliche Parallelschaltung mehrerer Diffusionszylinder dem tatsächlichen $CO_2$-Bedarf anpassen lässt. Die Anpassung an einen sich ändernden $CO_2$-Bedarf erfordert aufwendige und störende Umbauten im Aquarium. Des weiteren ist nach den Erkenntnissen der vorliegenden Erfindung der Diffusionsvorgang bei einem hohen, auf der Grenzschicht zwischen Gas und Flüssigkeit lastenden Druck am wirkungsvollsten. Bei der bekannten Ausführungsform liegt aber die Diffusionsmembran nahe der Wasseroberfläche, also gerade im Bereich niedrigsten Wasserdrucks. Messungen am bekannten Diffusionszylinder brachten das überraschende Ergebnis, dass wenigstens ein Teil der $CO_2$-Diffusion nicht über die Membran, sondern über die druckstabilisierte Gas-Wassergrenzschicht am Boden der Gassäule erfolgt. Die manuelle Füllung der Diffusionseinrichtung nach dem Stand der Technick erfordert schließlich regelmässig die Aufmerksamkeit einer Bedienungsperson. Ein derartiger Aufwand ist aber für kommerzielle Zuchtaquarien sowie für Dekorationsaquarien in Geschäftsräumen und Restaurants kaum zumutbar. Die Befüllung des Diffusionszylinders von Hand wird stets mit extremen Schwankungen im Füllstand sowie gelegentlichen Unregelmässigkeiten einhergehen, die sich auf die Konstanz der $CO_2$-Diffusionsrate nachteilig auswirken.

Aufgabe der Erfindung ist es, eine Vorrichtung der eingangs genannten Art zu schaffen, die handlich und leicht bedienbar sowie leicht einstellbar ist und bei der die Diffusionsrate ohne Umbauten über einen weiten Bereich variiert und damit wachselnden Bedürfnissen dynamisch angepasst werden kann.

Diese Aufgabe wird durch eine Vorrichtung der eingangs genannten Art gelöst, die dadurch gekennzeichnet ist, dass das Druckregelventil eingangsdruckseitig von einem Kleinventil gesperrt wird, das durch ein vom Regeldruck und einer einstellbaren Vorspannung beaufschlagten, druckfederbelasteten, gegen einen Dichtring axial bewegbaren, mit einem Stössel versehenen Ventilkopf betätigbar ist, wobei an dem dem Ventilkopf gegenüberliegenden Ende des Stössels ein mit diesem axial bewegbarer Druckpilz angeordnet ist, der auf einer elastischen, scheibenförmigen Membran aufliegt, die den Regeldruckbereich des Druckregelventils dichtend abschliesst.

Vorteilhafte Ausführungsformen der erfindungsgemässen Vorrichtung sind durch die in den Unteransprüchen niedergelegten Merkmale gekennzeichnet.

Die erfindungsgemässe Vorrichtung verzichtet auf eine kostenaufwendige Diffusionsmembran, die zudem in der biologisch aktiven Umgebung eines Aquariums ständig der Gefahr des Zusetzens durch Schwebeteilchen und Pflanzenwuchs unterliegt und regelmässig gereinigt werden muss. Die erfindungsgemässe Formgebung des Diffusors gestattet es, die Grösse der wirksamen Diffusionsgrenzfläche zwischen Gas und Flüssigkeit durch Vorgabe eines mittleren Regelgasdrucks festzulegen. Sie ist also durch Vorwahl eines mittleren Gasdruckes einstellbar und der Gasdruck ist durch ein Druckregel- bzw. Druckminderventil um den vorgewählten Mittelwert selbsttätig stabilisierbar. Entsprechend dem gewünschten Stellbereich kann die Form des Diffusors dazu in weiten Grenzen variieren. Nach erfolgter Einstellung wird der gewünschte Druck mit geringen Regelausschlägen über lange Zeit konstant gehalten. Die erfindungsgemässe Automatik zum Selbstbefüllen des Diffusors gestattet erstmals eine Druckregelung mit einem Schalthub von ± 10 Millibar. Der so gestaltete Diffusor kann auf den Boden eines Aquariums gestellt werden, derart, dass die Gasaustrittsöffnung in Bodennähe liegt. Dies hat den Vorteil, dass das $CO_2$ im Wurzelbereich der gesetzten Pflanzen zugeführt wird, was sich günstig auf das Wachstum auswirkt.

Die Erfindung wird anhand eines in den Zeichnungen dargestellten Ausführungsbeispiels näher erläutert. Es zeigen :

Figur 1 eine seitliche Schnittansicht eines erfindungsgemässen Diffusors ; und

Figur 2 eine vergrösserte Schnittansicht in axialer Richtung eines besonders vorteilhaften Druckregelventils, das dem Diffusor vorgeschaltet ist.

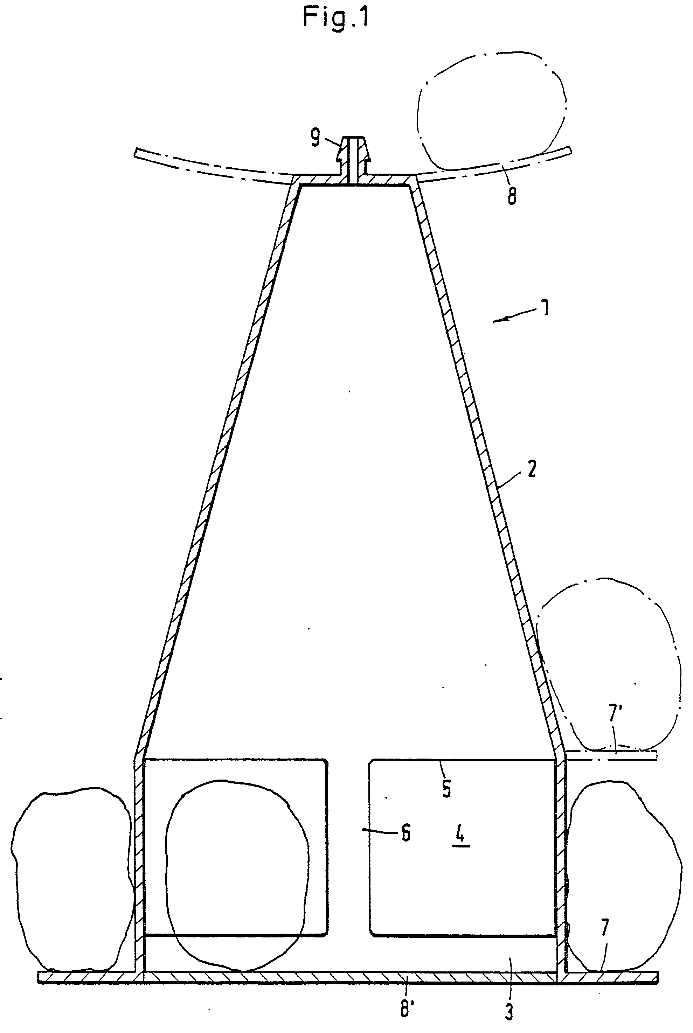

Der Diffusor 1 ist ein in seinem unteren Bereich offener Hohlkörper. Seine Formgebung richtet sich im einzelnen nach der gewünschten Veränderung der wirksamen Diffusionsgrenzfläche mit dem eingestellten Regelgasdruck. Fig. 1 zeigt eine Ausführungsform mit einer konisch sich nach unten weitenden Kontur, bei dem also eine Erhöhung des Regeldrucks mit einer Vergrösserung der Diffusionsgrenzfläche einhergeht. Der Diffusor 1 wird vorzugsweise auf dem Boden eines Flüssigkeitsbehälters, beispielsweise eines Aquariums (nicht dargestellt) aufgestellt.

In dem dargestellten Ausführungsbeispiel ist dazu an den konischen Teil 2 des Diffusors 1 ein zylindrisches Randstück 3 angeformt, das mit grossflächigen Ausnehmungen 4 durchbrochen ist. Über diese Ausnehmungen 4 kommuniziert das Innere des Diffusors 1 mit der umgebenden Flüssigkeit. Die Oberkante 5 der Ausnehmungen 4 begrenzt den maximalen Füllstand des Diffusors 1 mit Gas. Die Mantelfläche des Randstücks 3 zwischen den Ausnehmungen 4 bildet eine Reihe von Füssen 6, die einen hinreichenden Abstand zwischen dem Boden des Flüssigkeitsbehälters (nicht dargestellt) und der Linie maximalen Füllstands in dem Diffusor 1 und damit einen ungehinderten Flüssigkeitsaustausch gewährleistet. Anstelle der Ausnehmungen 4 im zylindrischen Randstück 3 können am Unterrand des Diffusors 1 auch Einkerbungen, Auflagenocken usw. vorgesehen sein (nicht dargestellt).

Die Fixierung bzw. Verankerung des Diffusors 1 auf dem Boden des Behälters wird für Anwendungen in der Aquaristik durch die dargestellte konische Formgebung erleichtert. Der Diffusor 1 kann so in einfacher Weise zwischen seitlich angelegte Steine verkantet und dadurch zugleich kaschiert werden. Zur Auflage von beschwerendem Material kann das bodennahe Randstück 3 des Diffusors 1 mit einer umlaufenden oder unterbrochenen flanschartigen Auskragung 7 versehen sein. Alternativ oder zusätzlich können am Aussenmantel des Diffusors 1 weitere Auskragungen 7' ausgeformt werden und die Oberseite des Diffusors 1 als Auflagefläche, beispielsweise in Form eines Auflagetellers 8 ausgestaltet sein. In einer besonders vorteilhaften Ausführungsform ist der Diffusor 1 an seiner Unterseite mit einem lösbar eingesetzten oder eingeklebten Deckel 8' verschlossen, so dass beschwerendes Material auch in das Innere des Diffusors 1 eingebracht werden kann.

An der Oberseite des Diffusors 1 ist ein Ansatzstutzen 9 angeformt, der den Gaseintritt in das Innere des Diffusors 1 vermittelt. Auf den Ansatzstutzen 9 wird ein zur Ausstosseite des Druckregelventils führender Schlauch (nicht dargestellt) aufgeschoben. Der Diffusor 1 ist vorzugsweise einstückig aus Glas oder einem durchsichtigen bzw. durchscheinenden Kunststoff hergestellt.

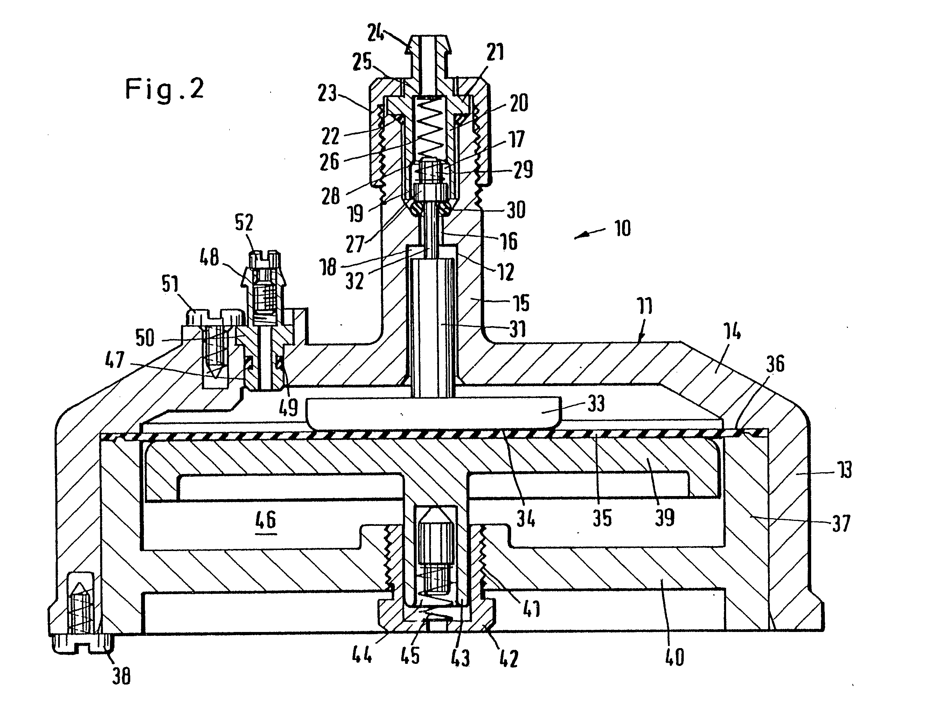

Die Funktionsteile des Druckregelventils 10 (Fig. 2) sind in ein Gehäuse 11 montiert. Dieses ist ein stirnseitig offenes, axialsymmetrisches Formteil mit einer durchgehenden, im Durchmesser gestuften Axialbohrung 12. Das Gehäuse 11 besteht aus einem weit ausgelegten Basiszylinder 13 und einem daran angeformten, konisch sich verjüngenden Abschnitt 14, der seinerseits in einen zylindrischen Gehäuseansatz 15 mit vergleichsweise geringem Durchmesser übergeht. Die Axialbohrung 12 im Gehäuseansatz 15 ist in etwa halber Höhe durch eine radiale Einschnürung 16 verengt, die das Innere des Gehäuseansatzes 15 in zwei annähernd gleichgrosse Kammern 17 und 18 teilt. Die dem freien Ende des Gehäuseansatzes 15 zugeordnete äußere Kammer 17 nimmt ein federbelastetes Kleinventil 19 auf und ist mit dem eingangsseitigen Gasdruck beaufschlagt. Die innere Kammer 18 gehört hingegen zum Regeldruckbereich des Druckregelventils 10. Die Steuerbewegung aller Komponenten dieses Druckregelventils 10 erfolgt in Axialrichtung des Gehäuses 11.

Das Kleinventil 19 besteht aus einer beidseitig offenen, axial durchbohrten Hülse 20, die koaxial passend in die äussere Kammer 17 des Gehäuseansatzes 15 einsetzbar ist. Die Hülse 20 liegt mit einem radial nach aussen abstehenden Flansch 21 dichtend auf der Stirnseite des Gehäuseansatzes 15 auf. Als Dichtung dient ein auf die Hülse 20 gegen den Flansch 21 aufgeschobener Rundschnurring 22, der in eine konische Phase am Ende der Axialbohrung 12 des Gehäuses 11 gepresst wird. Den Anpressdruck vermittelt eine auf der Rückseite des Flansches 21 gleitend anliegende Überwurfmutter 23, die auf ein Aussengewinde am Gehäuseansatz 15 aufgeschraubt wird.

In axialer Verlängerung ist einstückig an die Hülse 20 ein Ansatzstutzen 24 angeformt, der bei montierter Hülse 20 über die Überwurfmutter 23 hinausragt und das Aufschieben eines zur Druckquelle, beispielsweise einer $CO_2$-Patrone, führenden Schlauches (nicht dargestellt) gestattet. Die lichte Weite des Ansatzstutzens 24 ist gegenüber der Hülse 20 verengt. Die Verengungsstelle 25 bildet das Widerlager für eine im Inneren der Hülse 20 angeordnete Druckfeder 26. Diese Druckfeder 26 arbeitet gegen einen Ventilkopf 27, der im Inneren der Hülse 20 geführt und axial beweglich gelagert ist. Das axiale Bewegungsspiel ist dabei durch eine Stufe 28 in der Wandung der Hülse 20 begrenzt. Die Druckfeder 26 ist auf einen an den Ventilkopf 27 angeformten Zapfen 29 aufgeschoben. Durch die Vorspannung der Druckfeder 26 liegt der Ventilkopf 27 dichtend an einem Dichtring 30 an. Der Eingangsdruckbereich des Druckregelventils wird dadurch gegen den Regeldruckteil abgesperrt. Der Dichtring 30 ist in einem Dichtsitz auf der Einschnürung 16 gelagert, die die Kammern 17, 18 des Gehäuseansatzes 15 trennt. Das Innenmass des Dichtringes 30 entspricht dabei in etwa der lichten Weise der Einschnürung 16.

Der Ventilkopf 27 wird von der Regeldruckseite des Druckregelventils aus seiner Dichtstellung ausgehoben. Dazu dient ein Druckpilz 31, dessen zylindrischer Schaft axial in der inneren Kammer 18 des Gehäuseansatzes 15 gleitet. Auf der Stirnfläche des Schaftes ist ein Stössel 32 angeordnet, der durch die Einschnürung 16 des Gehäuseansatzes 15 und die mittige Öffnung des darauf aufliegenden Dichtringes 30 durchgreift. Der Stössel 32 wirkt arbeitsmässig gegen den Ventilkopf 27, an dem er lose anliegt. Der Druckpilz 31 liegt lose auf einer elastischen Membran 35 auf, die den Regeldruckteil des Druckregelventils 10 dichtend abschließt. Die Membran 35 besteht aus einer runden Membranscheibe, die an ihrem Umfangsrand von der einen Seite durch eine Schulter 36 an der Innenwand des Gehäuses 11 und von der anderen Seite durch einen Haltering 37 gehalten wird. Die Membran 35 bildet die Basis des konischen Gehäuseabschnitts 14 und liegt in der Schließstellung des Kleinventils 19 etwa eben. Die Druckplatte 33 des Druckpilzes 31 bedeckt den Mittelbereich der Membran 35 und ist im Inneren des membranbegrenzten konischen Gehäuseabschnitts in axialer Richtung beweglich. Das Bewegungsspiel des Druckpilzes 31 entspricht dabei wenigstens dem Schalthub des Kleinventils 19.

Die Membran 35 ist zwischen Haltering 37 und Gehäuse 11 druckdicht gelagert. Der Haltering 37 ist ein dem Innenmass des Basiszylinders 13 entsprechendes Passteil. Er wird von der dem Gehäuseansatz 15 gegenüberliegenden Seite des Gehäuses 11 koaxial in den Basiszylinder 13 eingesetzt, gegen die elastische Membran 35 gepresst und durch eine oder mehrere Blechschrauben 38 in der Dichtstellung arretiert.

Die Aussenluftseite der Membran 35 ist durch einen Kolben 39 belastet, der bis auf einen freien randnahen Bereich annähernd die gesamte Fläche der Membran 35 bedeckt. Der Kolben 39 ist federbelastet und in axialer Richtung beweglich gelagert. Zu diesem Zweck ist in den Haltering 37 ein relativ zu der Auflagefläche des Druckregelventils 10 von unten aus nach innen versetzter Zwischenboden 40 eingezogen. Dieser Zwischenboden 40 ist mit einer mittigen, axialen Gewindebohrung 41 versehen, in die eine Stellbüchse 42 eingeschraubt ist. In der Stellbüchse 42 ist die Kolbenstange 43 des die Membran 35 belastenden Kolbens 39 mit axialem Gleitspiel gehaltert und geführt. In der Kolbenstange 43 ist eine axiale Sackbohrung 44 vorgesehen, in die eine Druckfeder 45 eingesetzt ist, die gegen den Boden der Stellbüchse 42 wirkt. Die Einschraubtiefe der Stellbüchse 42 bestimmt somit die Kraft, mit der der Kolben 39 gegen die Membran 35 drückt.

Die von dem Mantel und dem Zwischenboden 40 des Halteringes 37 sowie der Membran 35 gebildete Kammer 46 ist durch die Gewindegänge der Stellbüchse 42 mit der Aussenluft verbunden. Der Druckausgleich ist dadurch in hinreichender Weise gewährleistet.

Seitlich am Gehäuse 11 des Druckregelventils 10 ist schließlich ein Gasauslass angeordnet. In der dargestellten Ausführungsform ist dazu durch die Wand des Gehäuses 11 eine Bohrung 47 geführt, die den Regeldruckbereich des Ventils trifft. In die Bohrung 47 ist von aussen ein Schlauchstutzen 48 eingefügt, dessen Wandung im unteren Bereich eine umlaufende Rundnut zur Aufnahme eines Dichtringes 49 sowie im oberen Bereich einen Haltekragen 50 aufweist. Der Schlauchstutzen 48 ist dichtend in die Bohrung 47 eingeschoben und an dem Haltekragen 50 mit einer Blechschraube 51 gegen das Gehäuse 11 arretiert. Das zu einer Schlaucholive erweiterte Ende des Schlauchstutzens 48 ist mit einem Gewinde versehen, in das von aussen eine Reduzierschraube 52 eingeschraubt ist. Der Gasstrom tritt im wesentlichen durch die Gewindegänge der Reduzierschraube 52 aus und ist dadurch stark gedrosselt. Die Reduzierschraube 52 kann entsprechend den Erfordernissen mit einer oder mehreren Einfräsungen senkrecht zu den Gewindegängen versehen sein, und demgemäss einen geringeren Strömungswiderstand bieten.

Die Funktion des erfindungsgemässen Druckregelventils 10 ist gekennzeichnet durch ein Kräftegleichgewicht am Ventilkopf 27, der gegen den auf der Gaseinlaßseite herrschenden Druck und die Vorspannung der Druckfeder 26 aus seinem Dichtsitz ausgehoben werden muss. Im Interesse einer geringen Betätigungskraft muss dazu die einlasseitig druckbeaufschlagte Fläche des Ventilkopfes 27 minimal sein und die Betätigung des Ventilkopfes 27 möglichst reibungsarm erfolgen. Die erforderliche Betätigungskraft wird von dem federbelasteten Kolben 39 über die elastische Membran 35 auf den Druckpilz 31 übertragen, der mit dem Stössel 32 auf den Ventilkopf 27 wirkt. Bis zum Absinken des Regeldrucks unter einen durch die Federvorspannung des Kolbens 39 bestimmten Sollwert wird diese Betätigungskraft durch den auf die grossflächige Membran 35 wirkenden Regeldruck kompensiert und der Ventilkopf 27 bleibt in der Dichtstellung. Der Sollwert wird an der Stellbüchse 42 vorgewählt. Nach erfolgtem Abheben des Ventilkopfes 27 muss sich im Regeldruckbereich eine hinreichende Druckerhöhung ergeben, um den Gaseinlass erneut zu schliessen. Zu diesem Zweck wird das Ausströmen des Gases aus dem Regeldruckbereich durch eine starke Drosselung verhindert.

Durch die Möglichkeit der Druckregelung im Niederdruckbereich mit Toleranzen von etwa ± 10 millibar ist eine präzise Füllstandsregelung des erfindungsgemässen Diffusors gegeben. Erfindungswesentliche Konstruktionsmerkmale des Druckregelventils sind dabei die Verwendung eines reibungsarmen Kleinventils auf der Gaseinlaßseite, einer grossflächigen, elastischen Membran im Regeldruckbereich sowie die starke Reduzierung des Gasstromes im Auslass.

Das erfindungsgemässe Druckregelventil ist für einen Eingangsdruck zwischen 100 millibar und 2 bar ausgelegt. In dem dargestellten Ausführungsbeispiel wird das Gas dem Druckregelventil über einen Schlauchstutzen zugeführt. Gegebenenfalls erforderliche, dem Druckregelventil separat vorgeschaltete Druckminderer, Reduzierventile und/oder Expansionskammern (alle nicht dargestellt) können selbstverständlich auch einstückig mit dem Druckregelventil verbunden sein.

## Patentansprüche

1. Vorrichtung zur dosierten Diffusion von Gasen in Flüssigkeiten, bestehend aus einem über eine Einlassvorrichtung mit Gas befüllbaren, flüssigkeitsumspülten, in seinem unteren Bereich offenen Diffusor (1), der über ein selbsttätig regelndes Druckregelventil (10) mit Gas befüllbar ist, das über einen Schlauch mit einem an dem dem offenen Bereich gegenüberliegenden Bereich des Diffusors (1) vorgesehenen Ansatzstutzen (9) verbunden ist, dadurch gekennzeichnet, dass das Druckregelventil (10) eingangsdruckseitig von einem Kleinventil (19) gesperrt wird, das durch ein vom Regeldruck und einer einstellbaren Vorspannung beaufschlagten, druckfederbelasteten, gegen einen Dichtring (30) axial bewegbaren, mit einem Stössel (32) versehenen Ventilkopf (27) betätigbar ist, wobei an dem dem Ventilkopf (27) gegenüberliegenden Ende des Stössels (32) ein mit diesem axial bewegbarer Druckpilz (31) angeordnet ist, der auf einer elastischen, scheibenförmigen Membran (35) aufliegt, die den Regeldruckbereich des Druckregelventils (10) dichtend abschliesst.

2. Vorrichtung nach Anspruch 1, dadurch gekennzeichnet, dass die dem Druckpilz gegenüberliegende Seite der Membran (35) durch einen axial bewegbaren Kolben (39) mit definierter Kraft beaufschlagbar ist.

3. Vorrichtung nach Anspruch 1 und 2, dadurch gekennzeichnet, dass der Ventilkopf (27), der Druckpilz (31) und der Kolben (39) in der Achsenrichtung eines das Druckregelventil (10) umschliessenden Gehäuses (11) beweglich geführt sind und die Membran (35) an ihrem Umfangsrand in einer Schulter (36) an der Innenwand des Gehäuses (11) gehaltert ist.

4. Vorrichtung nach Anspruch 2 und 3, dadurch gekennzeichnet, dass die Membran (35) durch einen in das Gehäuse (11) einsetzbaren Haltering (37) dichtend gegen die Schulter (36) gepresst wird und in dem Haltering (37) ein Zwischenboden (40) mit einer mittigen Gewindebohrung (41) eingezogen ist, in die eine Stellbüchse (42) einschraubbar ist, die das Widerlager für eine Kolbenstange (43) des die Membran (35) belastenden Kolbens (39) bildet.

5. Vorrichtung nach Anspruch 4, dadurch gekennzeichnet, dass die Kolbenstange (43) in der Stellbüchse (42) mit axialem Bewegungsspiel gehaltert ist und eine Sackbohrung (44) aufweist, in die eine gegen die Stellbüchse (42) wirkende Druckfeder (45) eingesetzt ist.

6. Vorrichtung nach einem oder mehreren der Ansprüche 1 bis 5, dadurch gekennzeichnet, dass in einer Wand des Gehäuses (11) ein mit dem Regeldruckbereich des Druckregelventils (10) kommunizierender Gasauslass mit einem Schlauchstutzen (48) vorgesehen ist, auf den ein zu dem Ansatzstutzen (9) des Diffusors (1) führender Schlauch aufschiebbar ist.

7. Vorrichtung nach Anspruch 6, dadurch gekennzeichnet, dass in dem Schlauchstutzen (48) ein Gewinde vorgesehen ist, in das eine den Gasstrom stark drosselnde Reduzierschraube (52) einschraubbar ist.

## Claims

1. Device for the closed diffusion of gases in liquids, consisting of a liquid traversed diffuser (1) which is open at its lower region and which can be filled with gas through an inlet arrangement, the diffuser being fillable with gas through an automatically adjusting pressure control valve (10), which is connected by a hose to a connection piece (9) provided at the region of the diffuser (1) lying opposite the open region thereof, characterised in that the pressure control valve (10) is blocked at the input pressure side by a small valve (19) which is actuable axially against a sealing ring (30) by way of a valve head (27) having a plunger (32) under the action of the control pressure and an adjustable spring loading, the end of the plunger (32) remote from the valve head (27) being provided with a pressure transfer member (31) movable axially therewith, which engages on a resilient plate- shaped diaphragm (35) which sealingly closes the control pressure region of the pressure control valve (10).

2. Device according to claim 1, characterised in that the side of the diaphragm (35) remote from the pressure transfer member is loadable with a predetermined force by an axially movable piston (39).

3. Device according to claims 1 and 2, characterised in that the valve head (27), the pressure transfer member (31) and the piston (39) are movably guided in the axial direction of a housing (11) surrounding the pressure control valve (10), and the diaphragm (35) is secured at its periphery on a shoulder (36) in the inner wall of the housing.

4. Device according to claims 2 and 3, characterised in that the diaphragm (35) is sealingly pressed against the shoulder (36) by a retaining ring (37) insertable into the housing (11), and a partition (40) with a threaded central bore (41) is provided in the retaining ring (37) into which an adjusting bush (42) can be screwed, which forms the bearing for a piston rod (43) of the piston (39) loading the diaphragm (35).

5. Device according to claim 4, characterised in that the piston rod (43) is mounted in the adjusting bush (42) with axial play and has a blind bore (44) in which a compression spring (45) acting against the adjusting bush (42) is disposed.

6. Device according to one or more of claims 1 to 5, characterised in that a gas outlet communicating with the control pressure region of the pressure valve (10) is provided in a wall of the housing (11), the gas outlet having a connection piece (48) onto which a hose leading to the connection piece (9) of the diffuser (1) can be pushed.

7. Device according to claim 6, characterised in that a thread is provided in the hose piece (48), into which a reduction screw (52) heavily throttling the gas flow, can be screwed.

## Revendications

1. Dispositif pour la diffusion dosée de gaz dans des liquides, comprenant un diffuseur (1) dont la zone inférieure est ouverte, qui est baigné par le liquide et est susceptible d'être rempli de gaz à partir d'un dispositif d'entrée, diffuseur qui peut se remplir de gaz à l'aide d'une soupape de réglage de pression (10) à réglage automatique, et qui est relié par un tuyau à un ajutage (9) prévu dans la zone du diffuseur (1) opposée à la zone ouverte, caractérisé en ce que la soupape de réglage de pression (10) est fermée du côté de la pression d'entrée par une petite soupape (19) qui est susceptible d'être actionnée par une tête de soupape (27) munie d'un poussoir (32), mobile axialement par rapport à une bague d'étanchéité (30), chargée par un ressort de compression et susceptible d'être soumis à la pression de réglage et à une précontrainte préréglable, l'extrémité du poussoir (32) opposée à la tête de soupape (27) ayant un élément en forme de champignon (31) de poussée, mobile axialement par rapport à l'extrémité du poussoir (32), élément en forme de champignon qui repose sur une membrane (35) élastique, en forme de disque, qui ferme de façon étanche la zone de pression de réglage de la soupape de réglage de pression (10).

2. Dispositif selon la revendication 1, caractérisé en ce que le côté de la membrane (35) opposé à l'élément en forme de champignon de poussée est susceptible d'être soumis à un piston (39) mobile axialement suivant une force déterminée.

3. Dispositif selon les revendications 1 et 2, caractérisé en ce que la tête de soupape (27), l'élément en forme de champignon de poussée (31) et le piston (39) sont guidés de façon mobile dans la direction axiale d'un boîtier (11) entourant la soupape de réglage de pression (10) et la membrane (35) est maintenue au niveau de son bord périphérique dans un épaulement (36) contre la paroi intérieure du boîtier (11).

4. Dispositif selon les revendications 2 et 3, caractérisé en ce que la membrane (35) est pressée de façon étanche contre l'épaulement (36) par une bague de fixation (37) logée dans le boîtier (11), et un fond intermédiaire (40) est prévu dans la bague de fixation (37), ce fond comportant un taraudage central (41) dans lequel peut se visser une douille de réglage (42) qui forme l'appui d'une tige de piston (43) du piston (39) chargeant la membrane (35).

5. Dispositif selon la revendication 4, caractérisé en ce que la tige de piston (43) est maintenue avec du jeu permettant le mouvement axial dans la douille de réglage (42) et comporte un trou borgne (44) dans lequel est logé un ressort de compression (45) agissant contre la douille de réglage (42).

6. Dispositif selon l'une ou plusieurs des revendications 1 à 5, caractérisé en ce que la paroi du boîtier (11) comporte une sortie de gaz avec un ajutage de tuyau (48) communiquant avec la zone de pression de réglage de la soupape de réglage de pression (10), ajutage sur lequel peut s'emmancher un tuyau allant jusqu'à l'ajutage (9) du diffuseur (1).

7. Dispositif selon la revendication 6, caractérisé en ce qu'un filetage est prévu dans l'ajutage de tuyau (48), filetage dans lequel peut se visser une vis réductrice (52) étranglant fortement l'écoulement du gaz.

0 067 900

Fig.1

Fig. 2